(19) Europäisches Patentamt / European Patent Office / Office européen des brevets

(11) **EP 4 458 906 B1**

(12) **EUROPEAN PATENT SPECIFICATION**

(45) Date of publication and mention of the grant of the patent:
**01.04.2026 Bulletin 2026/14**

(21) Application number: **22920683.4**

(22) Date of filing: **28.12.2022**

(51) International Patent Classification (IPC):
**C08K 3/32** (2006.01)    **C08L 71/10** (2006.01)

(52) Cooperative Patent Classification (CPC):
(C-Sets available)
**C08K 3/32;** C08G 2650/40; C08K 3/014;
C08K 2003/321; C08K 2003/324; C08K 2003/325;
C08K 2003/326; C08K 2201/014          (Cont.)

(86) International application number:
**PCT/JP2022/048558**

(87) International publication number:
**WO 2023/136168 (20.07.2023 Gazette 2023/29)**

(54) **FULLY AROMATIC ETHER KETONE RESIN COMPOSITION, MOLDED ARTICLE THEREOF, AND PHOSPHORUS STABILIZER**

VOLLAROMATISCHE ETHERKETONHARZZUSAMMENSETZUNG, FORMKÖRPER DARAUS UND PHOSPHORHALTIGE STABILISATOREN

COMPOSITION DE RÉSINE ÉTHERCÉTONE ENTIÈREMENT AROMATIQUE, ARTICLE MOULÉ DE CELLE-CI ET STABILISANT À BASE DE PHOSPHORE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.01.2022 JP 2022002415**

(43) Date of publication of application:
**06.11.2024 Bulletin 2024/45**

(73) Proprietor: **Polyplastics Co., Ltd.**
**Tokyo 108-8280 (JP)**

(72) Inventor: **TAKEUCHI Ryo**
**Fuji-shi, Shizuoka 416-8533 (JP)**

(74) Representative: **Maiwald GmbH**
**Elisenhof**
**Elisenstraße 3**
**80335 München (DE)**

(56) References cited:
WO-A1-01/94472        WO-A1-2020/188202
JP-A- 2013 534 570    JP-A- 2019 515 079
JP-A- 2021 527 748

(52)  Cooperative Patent Classification (CPC): (Cont.)

C-Sets
**C08K 3/32, C08L 71/10**

**Description**

TECHNICAL FIELD

The present invention relates to a fully aromatic ether ketone resin composition, molded article thereof, and phosphorus stabilizer.

BACKGROUND ART

A fully aromatic ether ketone resin is also known as an abbreviation of polyaryl ether ketone (PAEK), and polyether ether ketone (PEEK), polyether ketone (PEK), polyether ketone ketone (PEKK), polyether ketone ether ketone ketone (PEKEKK), and the like are placed on the market as products. Since a fully aromatic ether ketone resin generally has a high melting point (over 300°C), it is necessary to heat the resin to a high temperature in melting the resin. However, at such a high temperature, there is a problem that stability to a thermal degradation is lacked. Therefore, various measures have been taken for stabilization in a molten state (see Patent Literatures 1 and 2). The stabilization to a thermal oxidation in a molten state is realized by adding a phosphate or a mixture of phosphates to resin compositions disclosed in Patent Literatures 1 and 2.

Citation List

Patent Literature

    [Patent Literature 1] Japanese Patent Application Publication No. 2018-520257

    [Patent Literature 2] Japanese Patent Application Publication No. 2018-520258

SUMMARY OF THE INVENTION

PROBLEMS TO BE SOLVED BY THE INVENTION

However, it is known that a fully aromatic ether ketone resin thickens in a molten state with increasing retention time. Such thickening is generally considered to be caused by crosslinking due to an oxidation in association with a processing temperature for a fully aromatic ether ketone resin being generally very high (over 350°C). The resin compositions disclosed in Patent Literatures 1 and 2 are intended to achieve stabilization to the thermal oxidation in the molten state. However, an increase or decrease in a viscosity with increasing retention time includes many factors such as a reaction between remaining reactive terminals, oxidative cross-linking, molecular chain elongation due to a side reaction by a remaining catalyst, and molecular chain breakage due to heat, oxygen, and residual impurities. Therefore, it is not possible to improve retention stability for melt viscosity simply by achieving stabilization to thermal oxidation.

In addition, according to a study made by the present inventor, a phosphate (a dihydrogen phosphate ($NaH_2PO_4$ or the like) or a mixture of a dihydrogen phosphate and a hydrogen phosphate ($Na_2HPO_4$ or the like)) has high metal corrosivity especially in the presence of water and at a high temperature. Therefore, when a phosphate is used for stabilization to a thermal oxidation in a molten state as described above, there is a possibility of corrosion of a metal members in equipment such as an extruder, and deterioration in manufacturability is of concern.

The present invention has been devised in view of the above problems in the past, and an object of the present invention is to provide a fully aromatic ether ketone resin composition having excellent retention stability of melt viscosity and manufacturability, a molded article thereof, and a phosphorus stabilizer excellent in metal corrosion resistance at a high temperature.

MEANS FOR SOLVING THE PROBLEM

As a result of diligent study to solve the above problems, the present inventor found that the retention stability of the melt viscosity can be enhanced by adjusting the pH of the fully aromatic ether ketone resin composition to be in a predetermined range (neutral region). Further, the present inventor found that the metal corrosion resistance at a high temperature can be enhanced by using a specific phosphate in a specific combination, leading to the completion of the present invention.

One aspect of the present invention for solving the above problems is as follows.

(1) A fully aromatic ether ketone resin composition including: (A) a fully aromatic ether ketone resin; and (B) a phosphorus stabilizer, in which (B) the phosphorus stabilizer contains (B1) a dihydrogen phosphate and (B2) a hydrogen phosphate, (B1) the dihydrogen phosphate is one or more dihydrogen phosphates of alkali metals, or one or more dihydrogen phosphates of metals selected from the group consisting of alkaline earth metals and magnesium, (B2) the hydrogen phosphate is one or more hydrogen phosphates of alkali metals, or one or more hydrogen phosphate of metals selected from the group consisting of alkaline earth metals and magnesium, when (B1) the dihydrogen phosphate is one or more dihydrogen phosphates of alkali metals, (B2) the hydrogen phosphate is one or more hydrogen phosphates of metals selected from the group consisting of alkaline earth metals and magnesium, when (B1) the dihydrogen phosphate is one or more dihydrogen phosphates of metals selected from the group consisting of alkaline earth metals and magnesium, (B2) the hydrogen phosphate is one or more hydrogen phosphates of alkali metals, and a total amount of (B) the phosphorus stabilizer is 100 to 5000 mass ppm.

(2) The fully aromatic ether ketone resin composition according to (1) above, in which when $[M^I]$ denotes the number of moles of the alkali metals in (B) the phosphorus stabilizer, $[M^{II}]$ denotes the number of moles of the metals selected from the group consisting of alkaline earth metals and magnesium in (B) the phosphorus stabilizer, and $[P]$ denotes the number of moles of phosphorus in (B) the phosphorus stabilizer, then $1.00 < ([M^I] + [M^{II}] * 2) / [P] < 2.00$ is satisfied.

(3) The fully aromatic ether ketone resin composition according to (1) or (2) above, in which when $[M^I]$ denotes the number of moles of the alkali metals in (B) the phosphorus stabilizer, $[M^{II}]$ denotes the number of moles of the metals selected from the group consisting of alkaline earth metals and magnesium in (B) the phosphorus stabilizer, and $[P]$ denotes the number of moles of phosphorus in (B) the phosphorus stabilizer, then $1.10 \leq ([M^I] + [M^{II}] * 2) / [P] \leq 1.80$ is satisfied.

(4) The fully aromatic ether ketone resin composition according to any one of (1) to (3) above, in which (A) the fully aromatic ether ketone resin is one or more selected from the group consisting of polyether ketone, polyether ether ketone, and polyether ketone ether ketone ketone.

(5) The fully aromatic ether ketone resin composition according to any one of (1) to (4) above, in which (B1) the dihydrogen phosphate is a dihydrogen phosphate of one or more metals selected from the group consisting of sodium, potassium, magnesium, and calcium, and (B2) the hydrogen phosphate is a hydrogen phosphate of one or more metals selected from the group consisting of sodium, potassium, magnesium, and calcium.

(6) The fully aromatic ether ketone resin composition according to any one of (1) to (5) above, in which a total amount of (B) the phosphorus stabilizer is 100 to 1000 mass ppm.

(7) The fully aromatic ether ketone resin composition according to any one of (1) to (6) above, in which (A) the fully aromatic ether ketone resin is polyether ketone.

(8) A molded article obtained by molding the fully aromatic ether ketone resin composition according to any one of (1) to (7) above.

(9) A phosphorus stabilizer including: (B1) a dihydrogen phosphate; and (B2) a hydrogen phosphate, in which (B1) the dihydrogen phosphate is one or more dihydrogen phosphates of alkali metals, or one or more dihydrogen phosphates of metals selected from the group consisting of alkaline earth metals and magnesium, (B2) the hydrogen phosphate is one or more hydrogen phosphates of alkali metals, or one or more hydrogen phosphates of metals selected from the group consisting of alkaline earth metals and magnesium, when (B1) the dihydrogen phosphate is one or more dihydrogen phosphates of alkali metals, (B2) the hydrogen phosphate is one or more hydrogen phosphates of metals selected from the group consisting of alkaline earth metals and magnesium, and when (B1) the dihydrogen phosphate is one or more dihydrogen phosphates of the metals selected from the group consisting of alkaline earth metals and magnesium, (B2) the hydrogen phosphate is one or more hydrogen phosphates of alkali metals.

(10) The phosphorus stabilizer according to (9) above, in which when $[M^I]$ denotes the number of moles of the alkali metals, $[M^{II}]$ denotes the number of moles of the metals selected from the group consisting of alkaline earth metals and magnesium, and $[P]$ denotes the number of moles of phosphorus, then $1.00 < ([M^I] + [M^{II}] * 2) / [P] < 2.00$ is satisfied.

(11) The phosphorus stabilizer according to (9) or (10) above, in which (B1) the dihydrogen phosphate is a dihydrogen phosphate of one or more metals selected from the group consisting of sodium, potassium, magnesium, and calcium, and (B2) the hydrogen phosphate is a hydrogen phosphate of one or more metals selected from the group consisting of sodium, potassium, magnesium, and calcium.

(12) The phosphorus stabilizer according to any one of (9) to (11) above, in which when $[M^I]$ denotes the number of moles of the alkali metals, $[M^{II}]$ denotes the number of moles of the metals selected from the group consisting of alkaline earth metals and magnesium, and $[P]$ denotes the number of moles of phosphorus, $1.10 \leq ([M^I] + [M^{II}] * 2) / [P] \leq 1.80$ is satisfied.

ADVANTAGEOUS EFFECT OF THE INVENTION

According to the present invention, it is possible to provide a fully aromatic ether ketone resin composition having excellent retention stability of the melt viscosity and excellent manufacturability, a molded article thereof, and a phosphorus stabilizer having low metal corrosivity at a high temperature.

BRIEF DESCRIPTION OF THE DRAWINGS

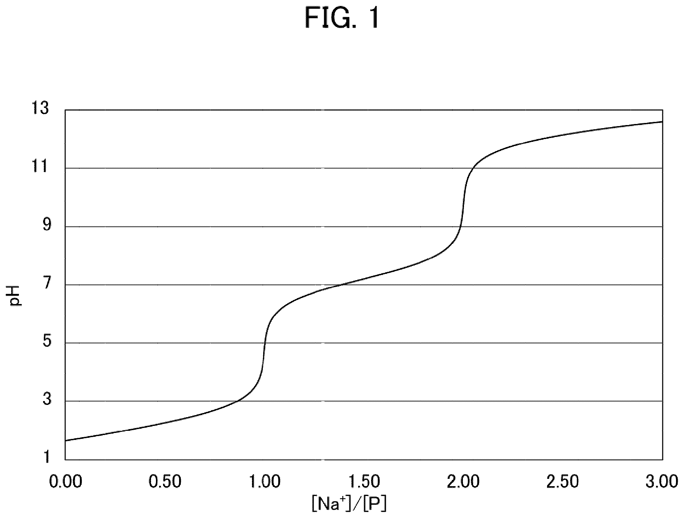

Fig. 1 is diagram showing the relationship between pH and an ionic ratio of phosphates ($[Na^+] / [P]$) using a graph.

MODES FOR CARRYING OUT THE INVENTION

<Fully aromatic ether ketone resin composition>

A fully aromatic ether ketone resin composition (hereinafter simply referred to as "resin composition") of the present embodiment contains (A) a fully aromatic ether ketone resin and (B) a phosphorus stabilizer. Further, (B) the phosphorus stabilizer contains (B1) a dihydrogen phosphate and (B2) a hydrogen phosphate. Still further, (B1) the dihydrogen phosphate is one or more dihydrogen phosphates of alkali metals, or one or more dihydrogen phosphates of metals selected from the group consisting of alkaline earth metals and magnesium. In addition, (B2) the hydrogen phosphate is one or more hydrogen phosphates of alkali metals or one or more hydrogen phosphates of metals selected from the group consisting of alkaline earth metals and magnesium. If (B1) the dihydrogen phosphate is one or more dihydrogen phosphates of alkali metals, (B2) the hydrogen phosphate is one or more hydrogen phosphates of metals selected from the group consisting of alkaline earth metals and magnesium. If (B1) the dihydrogen phosphate is one or more dihydrogen phosphates of metals selected from the group consisting of alkaline earth metals and magnesium, (B2) the hydrogen phosphate is one or more hydrogen phosphates of alkali metals. The total amount of (B) the phosphorus stabilizer is 100 to 5000 mass ppm.
In the following description, metals selected from the group consisting of alkaline earth metals and magnesium are referred to as "alkaline earth metals and the like".
The pH of the fully aromatic ether ketone resin composition of the present embodiment is adjusted to be in a neutral region range by (B1) the dihydrogen phosphate and (B2) the hydrogen phosphate, and this can enhance the retention stability of the melt viscosity. A mechanism thereof is inferred as follows.
There are two methods for polymerizing fully aromatic ether ketone resins: (1) a nucleophilic aromatic substitution reaction and (2) a Friedel-Crafts acylation reaction. In the present embodiment, resins polymerized by means of (1) the nucleophilic aromatic substitution reaction are targeted. That is, all of polyether ketone, polyether ether ketone, and polyether ketone ether ketone ketone as (A) the fully aromatic ether ketone resin are polymerized by means of (1) the nucleophilic aromatic substitution reaction. The fully aromatic ether ketone resin to be polymerized by means of (1) the nucleophilic aromatic substitution reaction is polymerized under basic conditions at a high temperature (300°C or higher) using a phenolic hydroxyl group and an aromatic halogen as reactive groups. To stop polymerization, a method for causing a terminal imbalance by means of a terminal blocking reaction and stopping the progress of polymerization is generally adopted (Japanese Unexamined Patent Application Publication No. Sho 61-138626). An alkali metal salt used as a basic catalyst is removed by washing with water after polymerization. It is considered from a polymerization mechanism that, if conditions such as a low reaction rate of a terminal blocking reaction and a remaining of basic catalyst are combined, when a resin is melted and retained, a polymerization reaction proceeds between reactive terminals, molecular weight increases, and a resin thickens. Therefore, in the present embodiment, by adjusting the pH of the resin composition to be in the neutral region, the reaction caused by a functional group of a terminal after polymerization is suppressed, and the retention stability of the melt viscosity is enhanced.
Meanwhile, in the resin composition of the present embodiment, (B1) the dihydrogen phosphate is one or more dihydrogen phosphates of alkali metals or one or more dihydrogen phosphates of alkaline earth metals and the like. Further, (B2) the hydrogen phosphate is one or more hydrogen phosphates of alkali metals or one or more hydrogen phosphates of alkaline earth metals and the like. In the present embodiment, a combination of (B1) the dihydrogen phosphate and (B2) the hydrogen phosphate has certain characteristics. That is, if (B1) the dihydrogen phosphate is a dihydrogen phosphate of an alkali metal, (B2) the hydrogen phosphate is a hydrogen phosphate of an alkaline earth metal and the like. Conversely, if (B1) the dihydrogen phosphate is one or more dihydrogen phosphates of alkaline earth metals and the like, (B2) the hydrogen phosphate is one or more hydrogen phosphates of alkali metals. In other words, it is not possible that both of (B1) the dihydrogen phosphate and (B2) the hydrogen phosphate are alkali metal salts or salts of alkaline earth metals and the like, and if one of them is an alkali metal salt, the other of them is a salt of an alkaline earth metal and the like.

In the present embodiment, metal corrosion can be suppressed by combining (B1) the dihydrogen phosphate and (B2) the hydrogen phosphate as described above, and the mechanism thereof is inferred as follows. That is, an alkali metal phosphate is generally soluble in water, but the presence of a divalent or higher metal ion (in the present embodiment, an ion of an alkaline earth metal and the like) forms a salt indicated by $M^{(I)}M^{(II)}PO_4$. Most of these salts are poorly soluble salts (The journal of the Metal Finishing Society, Vol. 28, No. 1, 1977). Therefore, it is assumed that the solubility of a phosphate changed, the generation of an acid was suppressed, and the metal corrosivity decreased.

Each component of the fully aromatic ether ketone resin composition of the present embodiment will be described in detail below.

[(A) Fully aromatic ether ketone resin]

A fully aromatic resin composition of the present embodiment contains one or more selected from the group consisting of polyether ketone (PEK), polyether ether ketone (PEEK), and polyether ketone ether ketone ketone (PEKEKK), as (A) a fully aromatic ether ketone resin. Fully aromatic ether ketone resins are basic because the resins are polymerized by means of (1) the nucleophilic aromatic substitution reaction. From this viewpoint, the pH of the fully aromatic ether ketone resin itself is preferably 9 to 12. (A) The fully aromatic ether ketone resin is preferably polyether ketone (PEK).

As described above, there are two methods for polymerizing the fully aromatic ether ketone resin: (1) the nucleophilic aromatic substitution reaction and (2) the Friedel-Crafts acylation reaction. Among the above specific examples, only polyether ketone ketone (PEKK) is generally polymerized by means of (2) the Friedel-Crafts acylation reaction. Such polyether ketone ketone (PEKK) exhibits neutrality.

[(B) Phosphorus stabilizer]

In the present embodiment, as described above, (B) the phosphorus stabilizer contains (B1) the dihydrogen phosphate and (B2) the hydrogen phosphate. (B1) The dihydrogen phosphate and (B2) the hydrogen phosphate will be described below individually.

((B1) Dihydrogen phosphate)

(B1) The dihydrogen phosphate used in the present embodiment is one or more dihydrogen phosphates of alkali metals or one or more dihydrogen phosphate of alkaline earth metals and the like.

Examples of dihydrogen phosphates of alkali metals include potassium dihydrogen phosphates, sodium dihydrogen phosphates, lithium dihydrogen phosphates, rubidium dihydrogen phosphates, cesium dihydrogen phosphates, and the like.

Further, examples of dihydrogen phosphates of alkaline earth metals and the like includes magnesium dihydrogen phosphates, calcium dihydrogen phosphates, strontium dihydrogen phosphates, barium dihydrogen phosphates, and the like.

Among those, (B1) the dihydrogen phosphate is preferably a dihydrogen phosphate of one or more metals selected from the group consisting of sodium, potassium, magnesium, and calcium.

((B2) Hydrogen phosphate)

(B2) The hydrogen phosphate used in the present embodiment is one or more hydrogen phosphates of alkali metals or one or more hydrogen phosphates of alkaline earth metals and the like.

Examples of hydrogen phosphates of alkali metals include dipotassium hydrogen phosphates, disodium hydrogen phosphates, dilithium hydrogen phosphates, dirubidium hydrogen phosphates, dicesium hydrogen phosphates, and the like.

Examples of hydrogen phosphates of alkaline earth metals and the like include magnesium hydrogen phosphates, calcium hydrogen phosphates, barium hydrogen phosphates, and the like.

Among those, (B2) the hydrogen phosphate is preferably a hydrogen phosphate of one or more metals selected from the group consisting of sodium, potassium, magnesium, and calcium.

In (B) the phosphorus stabilizer according to the present embodiment, examples of combinations of (B1) the dihydrogen phosphate and (B2) the hydrogen phosphate include the following, but the combinations are not limited to the following in the present embodiment.

A combination in which (B1) the dihydrogen phosphate is a potassium dihydrogen phosphate, and (B2) the hydrogen phosphate is a magnesium hydrogen phosphate.

A combination in which (B1) the dihydrogen phosphate is a sodium dihydrogen phosphate, and (B2) the hydrogen phosphate is a calcium hydrogen phosphate.

A combination in which (B1) the dihydrogen phosphate is a magnesium dihydrogen phosphate, and (B2) the hydrogen phosphate is a dipotassium hydrogen phosphate.

A combination in which (B1) the dihydrogen phosphate is a calcium dihydrogen phosphate, and (B2) the hydrogen phosphate is a disodium hydrogen phosphate.

A combination in which (B1) the dihydrogen phosphate is a potassium dihydrogen phosphate, and (B2) the hydrogen phosphate is a magnesium hydrogen phosphate and a calcium hydrogen phosphate.

A combination in which (B1) the dihydrogen phosphate is a potassium dihydrogen phosphate and a sodium dihydrogen phosphate, and (B2) the hydrogen phosphate is a magnesium hydrogen phosphate.

A combination in which (B1) the dihydrogen phosphate is a potassium dihydrogen phosphate and a sodium dihydrogen phosphate, and (B2) the hydrogen phosphate is a magnesium hydrogen phosphate and a calcium hydrogen phosphate.

A combination in which (B1) the dihydrogen phosphate is a magnesium dihydrogen phosphate and a calcium dihydrogen phosphate, and (B2) the hydrogen phosphate is a dipotassium hydrogen phosphate and a disodium hydrogen phosphate.

In (B) the phosphorus stabilizer, assuming that the number of moles of alkali metals is $[M^I]$, the number of moles of alkaline earth metals and the like is $[M^{II}]$, and the number of moles of phosphorus is $[P]$, it is preferable to satisfy $1.00 < ([M^I] + [M^{II}] * 2) / [P] < 2.00$. This inequality will be described with reference to Fig. 1. Since the number of moles of $[H_2PO_4]$ or $[HPO_4]$ is equivalent to the number of moles of phosphorus, they are expressed as the number of moles of phosphorus $[P]$ in the above inequality.

Fig. 1 is a graph showing the relationship between the pH and an ionic ratio of phosphates ($[Na^+] / [P]$). In Fig. 1, when a value of $[Na^+] / [P]$ is 1.00, a composition is $NaH_2PO_4$, and when a value is 2.00, a composition is $Na_2HPO_4$. When a value of $[Na^+] / [P]$ is more than 1.00 and is less than 2.00, a composition is a mixture of $NaH_2PO_4$ and $Na_2HPO_4$. In this state, the pH is in the neutral region, and the retention stability of the melt viscosity is enhanced.

In the present embodiment, considering the phosphorus stabilizer containing (B1) the dihydrogen phosphate and (B2) the hydrogen phosphate, and a valence (monovalent) of alkali metals and a valence (divalent) of alkaline earth metals and the like, if $1.00 < ([M^I] + [M^{II}] * 2) / [P] < 2.00$ is satisfied, the pH is in the neutral region, and the retention stability of the melt viscosity is enhanced. Further, it is more preferable to satisfy $1.10 \leq ([M^I] + [M^{II}] * 2) / [P] \leq 1.80$.

The total amount of (B) the phosphorus stabilizer described above is 100 to 5000 mass ppm. If the amount is less than 100 mass ppm, the retention stability of the melt viscosity is inferior, and if the amount is more than 5000 mass ppm, the manufacturability is inferior. The amount is preferably 100 to 1000 mass ppm, and more preferably 200 to 800 mass ppm.

[Other components]

In the present embodiment, one or more of the following can be added to a thermoplastic resin as common additives when needed: a lubricant, a mold release agent, an antistatic agent, a surfactant, a flame retardant, an organic polymer material, and an inorganic or organic powdery state or platelike filler. However, even if other components are added, the pH of the resin composition needs be in the neutral region.

It is preferable that the resin composition of the present embodiment does not contain moisture in order to further enhance metal corrosion resistance.

<Molded article>

A molded article of the present embodiment is obtained by molding the fully aromatic ether ketone resin composition of the present embodiment described above. Since the resin composition has excellent retention stability of the melt viscosity, the molded article can be stably used even if the molded article is obtained by performing a molding processes involving a long-time exposure to a high temperature, such as continuous molding for a long time by injection molding or solid phase extrusion with a long retention time. Further, since the resin composition has excellent manufacturability, corrosion in a manufacturing apparatus is reduced during molding of the molded article.

There are no particular limitations to methods of fabricating the molded article using the fully aromatic ether ketone resin composition of the present embodiment, and a known method can be adopted. The fully aromatic ether ketone resin composition of the present embodiment is put into an extruder, and then melt-kneaded and pelletized to form a pellet, then the pellet is put into an injection molding machine having a predetermined mold, and accordingly the molded article can be fabricated by means of injection molding, for example.

The molded article of the present embodiment can be suitably used for use applications such as automobiles, aviation, heavy industry (steel and power plants), and electronic components.

<Phosphorus stabilizer>

The phosphorus stabilizer of the present embodiment contains (B1) the dihydrogen phosphate and (B2) the hydrogen phosphate. Further, (B1) the dihydrogen phosphate is one or more dihydrogen phosphates of alkali metals or one or more dihydrogen phosphates of metals selected from the group consisting of alkaline earth metals and magnesium. Still further, (B2) the hydrogen phosphate is one or more hydrogen phosphates of alkali metals or one or more hydrogen phosphates of metals selected from the group consisting of alkaline earth metals and magnesium. If (B1) the dihydrogen phosphate is one or more dihydrogen phosphates of alkali metals, then (B2) the hydrogen phosphate is one or more hydrogen phosphates of metals selected from the group consisting of alkaline earth metals and magnesium. If (B1) the dihydrogen phosphate is one or more dihydrogen phosphates of metals selected from the group consisting of alkaline earth metals and magnesium, then (B2) the hydrogen phosphate is one or more hydrogen phosphates of alkali metals.

The phosphorus stabilizer of the present embodiment is (B) the phosphorus stabilizer contained in the fully aromatic ether ketone resin composition of the present embodiment described above. Therefore, when the stabilizer is added to the fully aromatic ether ketone resin composition, the retention stability of the melt viscosity is excellent. In addition, since the phosphorus stabilizer of the present embodiment has low metal corrosivity at a high temperature, when the stabilizer is added to the fully aromatic ether ketone resin composition and then extruded by an extruder, it is possible to prevent corrosion of a metal member inside the extruder, for example.

As described above, the phosphorus stabilizer of the present embodiment is (B) the phosphorus stabilizer contained in the fully aromatic ether ketone resin composition of the present embodiment described above, and the description already made for (B) the phosphorus stabilizer applies without any changes. The preferred aspects and specific examples in the description made for (B) the phosphorus stabilizer are also the same. Therefore, a detailed description of the phosphorus stabilizer of the present embodiment will be omitted.

It is preferable that the phosphorus stabilizer of the present embodiment does not contain moisture for further enhancement of metal corrosion resistance.

[Examples]

Although the present embodiment will be described more specifically by using the following examples, the present embodiment is not limited to the following examples.

[Examples 1 to 6, Comparative Examples 1 to 7, and Reference Example 1] - Phosphorus stabilizer -

In each example, comparative example, and reference example, phosphorus stabilizers were obtained by blending (B1) the dihydrogen phosphate and (B2) the hydrogen phosphate shown in Tables 1 and 2 in the ratios shown in Tables 1 and 2. Further, assuming that the number of moles of alkali metals is $[M^I]$, the number of moles of alkaline earth metals and the like is $[M^{II}]$, and the number of moles of phosphorus is $[P]$, Tables 1 and 2 show calculated numerical values using a formula $([M^I] + [M^{II}] * 2) / [P]$.

[Evaluation]

The metal corrosion resistance of a phosphorus stabilizer obtained in each example, comparative example, and reference example was evaluated by performing an accelerated test according to the following procedure.

(a) The phosphorus stabilizer to be used in the test was dried for two hours using a blower dryer set at 180°C.

(b) The dried phosphorus stabilizer was metered into a mortar such that the total amount of a phosphate was 15 g with a composition equivalent to a phosphate composition of each example, comparative example, and reference example, 1.5 g of distilled water was added thereto, and the stabilizer and water were mixed.

(c) The phosphate prepared in (b) and a 15 mm * 15 mm * 3 mm metal test piece (steel type: Sanyo Special Steel Co., Ltd., SPM30) were put in a pressure resistant container having an inner tube made of PTFE, and then treated at 200°C for 72 hours.

(d) The phosphate and a corroded portion were removed from the treated metal test piece using a box cutter or the like, and the weight loss after the test was confirmed. Table 1 shows results.

Further, if the weight loss was 4% or less, the example was evaluated as "good", and if the weight loss was more than 4%, it was was evaluated as "poor". Tables 1 and 2 show evaluation results.

[Table 1]

| | | | | Example 1 | Example 2 | Example 3 | Example 4 | Example 5 | Example 6 | Example 7 |
|---|---|---|---|---|---|---|---|---|---|---|
| (B) Phosphorus stabilizer | (B1) Dihydrogen phosphate | Sodium dihydrogen phosphate | g | 4.0 | - | - | - | - | - | 7.5 |
| | | Potassium dihydrogen phosphate | g | - | 7.5 | - | - | - | 8.0 | - |
| | | Magnesium dihydrogen phosphate | g | - | - | - | - | 9.7 | - | - |
| | | Calcium dihydrogen phosphate | g | - | - | 11.5 | 12.8 | - | - | - |
| | | Ammonium dihydrogen phosphate | g | - | - | - | - | - | - | - |
| | (B2) Hydrogen phosphate | Disodium hydrogen phosphate | g | - | - | 3.5 | - | 5.3 | - | - |
| | | Dipotassium hydrogen phosphate | g | - | - | - | 2.2 | - | - | - |
| | | Magnesium hydrogen phosphate | g | - | - | - | - | - | 7.0 | - |
| | | Calcium hydrogen phosphate | g | 11.0 | 7.5 | - | - | - | - | 7.5 |
| | | Diammonium hydrogenphosphate | 9 | - | - | - | - | - | - | - |
| | | Total | g | 15.0 | 15.0 | 15.0 | 15.0 | 15.0 | 15.0 | 15.0 |
| | | ([$M^I$] + [$M^{II}$] * 2) / [P] | - | 1.71 | 1.50 | 1.20 | 1.10 | 1. 30 | 1.50 | 1.47 |
| | | Weight loss of meatl | % | 1 | 0 | 1 | 4 | 1 | 2 | 1 |
| | | Metal corrosion resistance | - | Good | Good | Good | Good | Good | Good | Good |

[Table 2]

| | | | | Comparative Example 1 | Comparative Example 2 | Comparative Example 3 | Comparative Example 4 | Comparative Example 5 | Comparative Example 6 | Comparative Example 7 | Reference Example 1 |
|---|---|---|---|---|---|---|---|---|---|---|---|
| (B) Phosphorus stabilizer | (B1) Dihydrogen phosphate | Sodium dihydrogen phosphate | g | 9.9 | 7.5 | - | - | - | - | - | - |
| | | Potassium dihydrogen phosphate | g | - | - | 7.3 | 11.3 | - | - | - | - |
| | | Magnesium dihydrogen phosphate | g | - | - | - | - | - | - | - | - |
| | | Calcium dihydrogen phosphate | g | - | - | - | - | 7.1 | - | 15.0 | - |
| | | Ammonium dihydrogen phosphate | g | - | - | - | - | - | 7.5 | - | - |
| | (B2) Hydrogen phosphate | Disodium hydrogen phosphate | g | 5.1 | - | 7.7 | - | - | - | - | 15.0 |
| | | Dipotassium hydrogen phosphate | g | - | 7.5 | - | 3.8 | - | - | - | - |
| | | Magnesium hydrogen phosphate | g | - | - | - | - | - | - | - | - |
| | | Calcium hydrogen phosphate | g | - | - | - | - | 7.9 | - | - | - |
| | | Diammonium hydrogenphosphate | g | - | - | - | - | - | 7.5 | - | - |
| | | Total | g | 15.0 | 15.0 | 15.0 | 15.0 | 15.0 | 15.0 | 15.0 | 15.0 |
| | | $([M^I] + [M^{II}] * 2) / [P]$ | - | 1.31 | 1.41 | 1.50 | 1.21 | 1.49 | - | 1.00 | 2.00 |
| | | Weight loss of mtal | % | 8 | 5 | 13 | 7 | 8 | 13 | 15 | 0 |
| | | Metal corrosion resistance | - | Poor | Poor | Poor | Poor | Poor | Poor | Poor | Good |

EP 4 458 906 B1

Tables 1 and 2 reveal that, in the evaluation of the metal corrosion resistance, good results were obtained in all Examples 1 to 7, while poor results were obtained in all Comparative Examples 1 to 7. In other words, it can be seen that the metal corrosion resistance at a high temperature is enhanced by using (B1) the dihydrogen phosphate and (B2) the hydrogen phosphate in a predetermined combination, while containing a predetermined amount of a phosphorus stabilizer as a whole. Reference Example 1 is an example in which a disodium hydrogen phosphate is added alone as (B2) the hydrogen phosphate. When a hydrogen phosphate is used alone, a problem of inferior metal corrosion resistance does not occur.

[Examples 8 to 13 and Comparative Examples 8 to 17] - Fully aromatic ether ketone resin composition -

In each example and comparative example, the raw material components shown in Tables 3 and 4 were blended in the ratios shown in Tables 3 and 4 to obtain powder of the fully aromatic ether ketone resin composition. (B) The phosphorus stabilizer used in each example and comparative example (excluding Comparative Example 17) is equivalent to any of phosphorus stabilizers of Examples 1 to 7, Comparative Examples 1 to 7, and Reference Example 1 described above, and the corresponding relationship thereof will be described below.
(B) The phosphorus stabilizers of Examples 8 to 13: (B) the phosphorus stabilizers of Examples 1 to 6, respectively
(B) The phosphorus stabilizers of Comparative Examples 8 to 12: (B) the phosphorus stabilizers of Comparative Examples 1 to 5, respectively
(B) The phosphorus stabilizer of Comparative Example 13: (B) the phosphorus stabilizer of Example 7
(B) The phosphorus stabilizers of Comparative Examples 14 and 15: (B) the phosphorus stabilizers of Comparative Examples 6 and 7, respectively
(B) The phosphorus stabilizer of Comparative Example 16: a phosphorus stabilizer of Reference Example 1
Further, details of the fully aromatic ether ketone resin used are as follows.

(A) Fully aromatic ether ketone resin

- Polyether ketone (PEK)

Polyether ketone powder was obtained by performing polymerization according to a manufacturing method disclosed in JP 2009-227961 A.

[Evaluation]

The following evaluation was performed using resin compositions obtained in each example and comparative example.

(1) Fabrication of resin composition pellet

The powder of the fully aromatic ether ketone resin composition obtained in each example and comparative example was melt-kneaded at a barrel set temperature of 380°C, and a die head set temperature of 400°C, using a twin screw extruder ZSK26MC manufactured by Coperion GmbH to obtain a resin composition pellet.

(2) Retention of melt viscosity

The melt viscosity of the obtained resin composition pellet was measured at a cylinder temperature set value of 400°C and a shear rate of 1000/second in accordance with ISO11443 using an orifice with an inner diameter of 1 mm and a length of 30 mm and using a CAPILOGRAPH 1B manufactured by Toyo Seiki Seisaku-sho, Ltd. The retention of the melt viscosity was calculated using the following formula (I). Tables 3 and 4 show the calculated retention of the melt viscosity.

$$\text{Retention of melt viscosity (\%)} = [(\text{melt viscosity with retention time of 30 minutes}) / (\text{melt viscosity with retention time of 10 minutes})] * 100 \tag{I}$$

(3) Retention stability of melt viscosity

Evaluation was made based on the retention of the melt viscosity calculated in each example and comparative example. That is, if the retention of the melt viscosity was 95% or more and less than 105%, it was evaluated as "good", and if the retention was less than 95%, or was 105% or more, it was evaluated as "poor". When an evaluation result was "good", this indicates that the retention stability of the melt viscosity is excellent. Tables 3 and 4 show evaluation results.

(4) Manufacturability of resin composition

The manufacturability of resin compositions of each example and comparative example was determined based on test results of the metal corrosion resistance of phosphorus stabilizers in Examples 1 to 6, Comparative Examples 1 to 7, and Reference Example 1 descried above. That is, the manufacturability was determined based on test results of the metal corrosion resistance of phosphorus stabilizers in Examples 1 to 6, Comparative Examples 1 to 7, and Reference Example 1 corresponding to (B) the phosphorus stabilizers used in each example and comparative example. Specifically, if the weight loss was 4% or less, the example was evaluated as "good", and if the weight loss was more than 4%, it was evaluated as "poor". When an evaluation result was "good", this indicates excellent manufacturability because the risk of corroding a manufacturing apparatus is small. Tables 3 and 4 show evaluation results.

[Table 3]

| | | | | Example 8 | Example 9 | Example 10 | Example 11 | Example 12 | Example 13 |
|---|---|---|---|---|---|---|---|---|---|
| (A) Fully aromatic ether ketone resin | Polyether ketone | | g | 3000 | 3000 | 3000 | 3000 | 3000 | 3000 |
| (B) Phosphorus stabilizer | (B1) Dihydrogen phosphate | Sodium dihydrogen phosphate | ppm | 70 | - | - | - | - | - |
| | | Potassium dihydrogen phosphate | ppm | - | 200 | - | - | - | 340 |
| | | Magnesium dihydrogen phosphate | ppm | - | - | - | - | 310 | - |
| | | Calcium dihydrogen phosphate | ppm | - | - | 560 | 950 | - | - |
| | | Ammonium dihydrogen phosphate | ppm | - | - | - | - | - | - |
| | (B2) Hydrogen phosphate | Disodium hydrogen phosphate | ppm | - | - | 170 | - | 170 | - |
| | | Dipotassium hydrogen phosphate | ppm | - | - | - | 160 | - | - |
| | | Magnesium hydrogen phosphate | ppm | - | - | - | - | - | 300 |
| | | Calcium hydrogen phosphate | ppm | 190 | 200 | - | - | - | - |
| | | Diammonium hydrogenphosphate | ppm | - | - | - | - | - | - |
| | Total | | ppm | 260 | 400 | 730 | 1110 | 480 | 640 |
| | $([M^I] + [M^{II}] * 2) / [P]$ | | - | 1.71 | 1.50 | 1.20 | 1.10 | 1.30 | 1.50 |
| Fully aromatic ether ketone resin composition | Retention of melt viscosity | | % | 101 | 100 | 99 | 97 | 97 | 98 |
| | Retention stability of melt viscosity | | - | Good | Good | Good | Good | Good | Good |
| | Manufacturability | | - | Good | Good | Good | Good | Good | Good |

[Table 4]

| | | | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 |
|---|---|---|---|---|---|---|---|---|---|---|---|---|
| (A) Fully aromatic ether ketone resin | Polyether ketone | g | 3000 | 3000 | 3000 | 3000 | 3000 | 3000 | 3000 | 3000 | 3000 | 3000 |
| (B) Phosphorus stabilizer | (B1) Dihydrogen phosphate | Sodium dihydrogen phosphate | ppm | 250 | 30 | - | - | - | 30 | - | - | - | - |
| | | Potassium dihydrogen phosphate | ppm | - | - | 540 | 30 | - | - | - | - | - | - |
| | | Magnesium dihydrogen phosphate | ppm | - | - | - | - | - | - | - | - | - | - |
| | | Calcium dihydrogen phosphate | ppm | - | - | - | - | 180 | - | - | 200 | - | - |
| | | Ammonium dihydrogen phosphate | ppm | - | - | - | - | - | - | 300 | - | - | - |
| | (B2) Hydrogen phosphate | Disodium hydrogen phosphate | ppm | 130 | - | 570 | - | - | - | - | - | 300 | - |
| | | Dipotassium hydrogen phosphate | ppm | - | 30 | - | 10 | - | - | - | - | - | - |
| | | Magnesium hydrogen phosphate | ppm | - | - | - | - | - | - | - | - | - | - |
| | | Calcium hydrogen phosphate | ppm | - | - | - | - | 200 | 30 | - | - | - | - |
| | | Diammonium hydrogenphosphate | ppm | - | - | - | - | - | - | 300 | - | - | - |
| | Total | ppm | 380 | 60 | 1110 | 40 | 380 | 60 | 600 | 200 | 300 | 0 |
| | ([M$^I$] + [M$^{II}$] * 2) / [P] | - | 1.31 | 1.41 | 1.50 | 1.21 | 1.49 | 1.47 | - | 1.00 | 2.00 | - |
| Fully aromatic ether ketone resin composition | Retention of melt viscosity | % | 98 | 105 | 100 | 108 | 100 | 106 | 93 | 96 | 110 | 112 |
| | Retention stability of melt viscosity | - | Good | Poor | Good | Poor | Good | Poor | Poor | Good | Poor | Poor |
| | Manufacturability | - | Poor | Poor | Poor | Poor | Poor | Good | Poor | Poor | Good | - |

15

Tables 3 and 4 reveal that, in Examples 8 to 13, the retention stability of the melt viscosity and the manufacturability of resin compositions are excellent. Meanwhile, in Comparative Examples 8 to 17, it is not possible to satisfy both the retention stability of the melt viscosity and the manufacturability of the resin compositions simultaneously.

Although (B) the phosphorus stabilizer of Example 7 is used in Comparative Example 13, since the amount thereof is too small, the retention stability of the melt viscosity is inferior. Similarly, in Comparative Example 16, the metal corrosion resistance is good because (B) the phosphorus stabilizer of Reference Example 1 is used, but the phosphorus stabilizer is a hydrogen phosphate alone and the pH is in a basic region (see Fig. 1). Therefore the retention stability of the melt viscosity is inferior.

## Claims

1. A fully aromatic ether ketone resin composition comprising:

   (A) a fully aromatic ether ketone resin; and
   (B) a phosphorus stabilizer, wherein
   (B) the phosphorus stabilizer contains (B1) a dihydrogen phosphate and (B2) a hydrogen phosphate,
   (B1) the dihydrogen phosphate is one or more dihydrogen phosphates of alkali metals or one or more dihydrogen phosphates of metals selected from the group consisting of alkaline earth metals and magnesium,
   (B2) the hydrogen phosphate is one or more hydrogen phosphates of alkali metals or one or more hydrogen phosphates of metals selected from the group consisting of alkaline earth metals and magnesium,
   when (B1) the dihydrogen phosphate is one or more dihydrogen phosphates of alkali metals, (B2) the hydrogen phosphate is one or more hydrogen phosphates of metals selected from the group consisting of the alkaline earth metals and magnesium,
   when (B1) the dihydrogen phosphate is one or more dihydrogen phosphates of metals selected from the group consisting of alkaline earth metals and magnesium, (B2) the hydrogen phosphate is one or more hydrogen phosphates of alkali metals, and
   a total amount of (B) the phosphorus stabilizer is 100 to 5000 mass ppm.

2. The fully aromatic ether ketone resin composition according to claim 1, wherein
   when $[M^I]$ denotes the number of moles of the alkali metals in (B) the phosphorus stabilizer, $[M^{II}]$ denotes the number of moles of the metals selected from the group consisting of alkaline earth metals and magnesium in (B) the phosphorus stabilizer, and $[P]$ denotes the number of moles of phosphorus in (B) the phosphorus stabilizer, then $1.00 < ([M^I] + [M^{II}] * 2) / [P] < 2.00$ is satisfied.

3. The fully aromatic ether ketone resin composition according to claim 1 or 2, wherein
   when $[M^I]$ denotes the number of moles of the alkali metals in (B) the phosphorus stabilizer, $[M^{II}]$ denotes the number of moles of the metals selected from the group consisting of alkaline earth metals and magnesium in (B) the phosphorus stabilizer, and $[P]$ denotes the number of moles of phosphorus in (B) the phosphorus stabilizer, then $1.10 \leq ([M^I] + [M^{II}] * 2) / [P] \leq 1.80$ is satisfied.

4. The fully aromatic ether ketone resin composition according to any one of claims 1 to 3, wherein

   (A) the fully aromatic ether ketone resin is one or more selected from the group consisting of polyether ketone, polyether ether ketone, and polyether ketone ether ketone ketone.

5. The fully aromatic ether ketone resin composition according to any one of claims 1 to 4, wherein

   (B1) the dihydrogen phosphate is a dihydrogen phosphate of one or more metals selected from the group consisting of sodium, potassium, magnesium, and calcium, and
   (B2) the hydrogen phosphate is a hydrogen phosphate of one or more metals selected from the group consisting of sodium, potassium, magnesium, and calcium.

6. The fully aromatic ether ketone resin composition according to any one of claims 1 to 5, wherein
   a total amount of (B) the phosphorus stabilizer is 100 to 1000 mass ppm.

7. The fully aromatic ether ketone resin composition according to any one of claims 1 to 6, wherein:

(A) the fully aromatic ether ketone resin is polyether ketone.

8. A molded article obtained by molding the fully aromatic ether ketone resin composition according to any one of claims 1 to 7.

9. A phosphorus stabilizer comprising:

(B1) a dihydrogen phosphate; and
(B2) a hydrogen phosphate, wherein
(B1) the dihydrogen phosphate is one or more dihydrogen phosphates of alkali metals or one or more dihydrogen phosphates of metals selected from the group consisting of alkaline earth metals and magnesium,
(B2) the hydrogen phosphate is one or more hydrogen phosphates of alkali metals, or one or more hydrogen phosphates of metals selected from the group consisting of alkaline earth metals and magnesium,
when (B1) the dihydrogen phosphate is the one or more dihydrogen phosphates of alkali metals, (B2) the hydrogen phosphate is the one or more hydrogen phosphates of the metals selected from the group consisting of alkaline earth metals and magnesium, and
when (B1) the dihydrogen phosphate is the one or more dihydrogen phosphates of the metals selected from the group consisting of alkaline earth metals and magnesium, (B2) the hydrogen phosphate is one or more hydrogen phosphates of alkali metals.

10. The phosphorus stabilizer according to claim 9, wherein
when $[M^I]$ denotes the number of moles of the alkali metals, $[M^{II}]$ denotes the number of moles of the metals selected from the group consisting of alkaline earth metals and magnesium, and $[P]$ denotes the number of moles of phosphorus, then $1.00 < ([M^I] + [M^{II}] * 2) / [P] < 2.00$ is satisfied.

11. The phosphorus stabilizer according to claim 9 or 10, wherein

(B1) the dihydrogen phosphate is a dihydrogen phosphate of one or more metals selected from the group consisting of sodium, potassium, magnesium, and calcium, and
(B2) the hydrogen phosphate is a hydrogen phosphate of one or more metals selected from the group consisting of sodium, potassium, magnesium, and calcium.

12. The phosphorus stabilizer according to any one of claims 9 to 11, wherein
when $[M^I]$ denotes the number of moles of the alkali metals, $[M^{II}]$ denotes the number of moles of the metals selected from the group consisting of alkaline earth metals and magnesium, and $[P]$ denotes the number of moles of phosphorus, then $1.10 \leq ([M^I] + [M^{II}] * 2) / [P] \leq 1.80$ is satisfied.

**Patentansprüche**

1. Vollständig aromatische Etherketonharzzusammensetzung, umfassend:

(A) ein vollständig aromatisches Etherketonharz; und
(B) einen Phosphorstabilisator, wobei
(B) der Phosphorstabilisator (B1) ein Dihydrogenphosphat und (B2) ein Hydrogenphosphat enthält,
(B1) das Dihydrogenphosphat ein oder mehrere Dihydrogenphosphate von Alkalimetallen oder ein oder mehrere Dihydrogenphosphate von Metallen ist, die aus der Gruppe ausgewählt sind, die aus Erdalkalimetallen und Magnesium besteht,
(B2) das Hydrogenphosphat ein oder mehrere Hydrogenphosphate von Alkalimetallen oder ein oder mehrere Hydrogenphosphate von Metallen ist, die aus der Gruppe ausgewählt sind, die aus Erdalkalimetallen und Magnesium besteht,
wenn (B1) das Dihydrogenphosphat ein oder mehrere Dihydrogenphosphate von Alkalimetallen ist, (B2) das Hydrogenphosphat ein oder mehrere Hydrogenphosphate von Metallen ist, die aus der Gruppe ausgewählt sind, die aus den Erdalkalimetallen und Magnesium besteht,
wenn (B1) das Dihydrogenphosphat ein oder mehrere Dihydrogenphosphate von Metallen ist, die aus der Gruppe ausgewählt sind, die aus Erdalkalimetallen und Magnesium besteht, (B2) das Hydrogenphosphat ein oder mehrere Hydrogenphosphate von Alkalimetallen ist, und
die Gesamtmenge (B) des Phosphorstabilisators 100 bis 5000 Massen-ppm beträgt.

2. Vollständig aromatische Etherketonharzzusammensetzung gemäß Anspruch 1, wobei
wenn [$M^I$] die Molzahl der Alkalimetalle in (B) dem Phosphorstabilisator bezeichnet, [$M^{II}$] die Molzahl der Metalle aus der Gruppe bestehend aus Erdalkalimetallen und Magnesium in (B) dem Phosphorstabilisator bezeichnet und [P] die Molzahl des Phosphors in (B) dem Phosphorstabilisator bezeichnet, dann $1,00 < ([M^I] + [M^{II}] * 2) / [P] < 2,00$ erfüllt ist.

3. Vollständig aromatische Etherketonharzzusammensetzung gemäß Anspruch 1 oder 2, wobei
wenn [$M^I$] die Molzahl der Alkalimetalle in (B) dem Phosphorstabilisator bezeichnet, [$M^{II}$] die Molzahl der Metalle aus der Gruppe bestehend aus Erdalkalimetallen und Magnesium in (B) dem Phosphorstabilisator bezeichnet und [P] die Molzahl des Phosphors in (B) dem Phosphorstabilisator bezeichnet, dann $1,10 \leq ([M^I] + [M^{II}] * 2) / [P] \leq 1,80$ erfüllt ist.

4. Vollständig aromatische Etherketonharzzusammensetzung gemäß einem der Ansprüche 1 bis 3, wobei

    (A) das vollaromatische Etherketonharz eines oder mehrere aus der Gruppe ausgewählt ist, die aus Polyetherketon, Polyetheretherketon und Polyetherketonetherketonketon besteht.

5. Vollständig aromatische Etherketonharzzusammensetzung gemäß einem der Ansprüche 1 bis 4, wobei

    (B1) das Dihydrogenphosphat ist ein Dihydrogenphosphat eines oder mehrerer Metalle, ausgewählt aus der Gruppe bestehend aus Natrium, Kalium, Magnesium und Calcium, und
    (B2) das Hydrogenphosphat ein Hydrogenphosphat eines oder mehrerer Metalle ist, ausgewählt aus der Gruppe bestehend aus Natrium, Kalium, Magnesium und Calcium.

6. Vollständig aromatische Etherketonharzzusammensetzung gemäß einem der Ansprüche 1 bis 5, wobei
die Gesamtmenge an (B) Phosphorstabilisator 100 bis 1000 ppm beträgt.

7. Vollständig aromatische Etherketonharzzusammensetzung nach einem der Ansprüche 1 bis 6, wobei

    (A) das vollaromatische Etherketonharz ein Polyetherketon ist.

8. Formkörper, der durch Formen der vollständig aromatischen Etherketonharzzusammensetzung gemäß einem der Ansprüche 1 bis 7 erhalten wird.

9. Phosphorstabilisator, umfassend:

    (B1) ein Dihydrogenphosphat; und
    (B2) ein Hydrogenphosphat, wobei
    (B1) das Dihydrogenphosphat ein oder mehrere Dihydrogenphosphate von Alkalimetallen oder ein oder mehrere Dihydrogenphosphate von Metallen ist, die aus der Gruppe ausgewählt sind, die aus Erdalkalimetallen und Magnesium besteht,
    (B2) das Hydrogenphosphat ein oder mehrere Hydrogenphosphate von Alkalimetallen oder ein oder mehrere Hydrogenphosphate von Metallen ist, die aus der Gruppe ausgewählt sind, die aus Erdalkalimetallen und Magnesium besteht,
    wenn (B1) das Dihydrogenphosphat das eine oder die mehreren Dihydrogenphosphate von Alkalimetallen ist, (B2) das Hydrogenphosphat das eine oder die mehreren Hydrogenphosphate der Metalle ist, ausgewählt aus der Gruppe bestehend aus Erdalkalimetallen und Magnesium, und
    wenn (B1) das Dihydrogenphosphat das eine oder die mehreren Dihydrogenphosphate der Metalle ist, die aus der Gruppe ausgewählt sind, die aus Erdalkalimetallen und Magnesium besteht, (B2) das Hydrogenphosphat das eine oder die mehreren Hydrogenphosphate von Alkalimetallen ist.

10. Phosphorstabilisator gemäß Anspruch 9, wobei
wenn [$M^I$] die Molzahl der Alkalimetalle bezeichnet, [$M^{II}$] die Molzahl der Metalle bezeichnet, die aus der Gruppe ausgewählt sind, die aus Erdalkalimetallen und Magnesium besteht, und [P] die Molzahl des Phosphors bezeichnet, dann $1,00 < ([M^I] + [M^{II}] * 2) / [P] < 2,00$ erfüllt ist.

11. Phosphorstabilisator gemäß Anspruch 9 oder 10, wobei

    (B1) das Dihydrogenphosphat ein Dihydrogenphosphat eines oder mehrerer Metalle ist, die aus der Gruppe ausgewählt sind, die aus Natrium, Kalium, Magnesium und Calcium besteht, und

(B2) das Hydrogenphosphat ein Hydrogenphosphat eines oder mehrerer Metalle ist, ausgewählt aus der Gruppe bestehend aus Natrium, Kalium, Magnesium und Calcium.

12. Phosphorstabilisator gemäß einem der Ansprüche 9 bis 11, wobei wenn [M$^I$] die Molzahl der Alkalimetalle bezeichnet, [M$^{II}$] die Molzahl der Metalle bezeichnet, die aus der Gruppe ausgewählt sind, die aus Erdalkalimetallen und Magnesium besteht, und [P] die Molzahl des Phosphors bezeichnet, dann $1{,}10 \leq ([M^I] + [M^{II}] * 2) / [P] \leq 1{,}80$ erfüllt ist.

## Revendications

1. Composition de résine éthercétone entièrement aromatique comprenant :

   (A) une résine éthercétone entièrement aromatique ;
   et
   (B) un stabilisant à base de phosphore, dans laquelle
   (B) le stabilisant à base de phosphore contient (B1) un dihydrogénophosphate et (B2) un hydrogénophosphate,
   (B1) le dihydrogénophosphate est un ou plusieurs dihydrogénophosphates de métaux alcalins ou un ou plusieurs dihydrogénophosphates de métaux sélectionnés dans le groupe consistant en les métaux alcalino-terreux et le magnésium,
   (B2) l'hydrogénophosphate est un ou plusieurs hydrogénophosphates de métaux alcalins ou un ou plusieurs hydrogénophosphates de métaux sélectionnés dans le groupe consistant en les métaux alcalino-terreux et le magnésium,
   lorsque (B1) le dihydrogénophosphate est un ou plusieurs dihydrogénophosphates de métaux alcalins, (B2) l'hydrogénophosphate est un ou plusieurs hydrogénophosphates de métaux sélectionnés dans le groupe consistant en les métaux alcalino-terreux et le magnésium,
   lorsque (B1) le dihydrogénophosphate est un ou plusieurs dihydrogénophosphates de métaux sélectionnés dans le groupe consistant en les métaux alcalino-terreux et le magnésium, (B2) l'hydrogénophosphate est un ou plusieurs hydrogénophosphates de métaux alcalins, et
   une quantité totale du (B) stabilisant à base de phosphore est de 100 à 5000 ppm en masse.

2. Composition de résine éthercétone entièrement aromatique selon la revendication 1, dans laquelle lorsque [M$^I$] désigne le nombre de moles des métaux alcalins dans (B) le stabilisant à base de phosphore, que [M$^{II}$] désigne le nombre de moles des métaux sélectionnés dans le groupe consistant en les métaux alcalino-terreux et le magnésium dans (B) le stabilisant à base de phosphore, et que [P] désigne le nombre de moles de phosphore dans (B) le stabilisant à base de phosphore, alors $1{,}00 < ([M^I] + [M^{II}] * 2) / [P] < 2{,}00$ est satisfait.

3. Composition de résine éthercétone entièrement aromatique selon la revendication 1 ou 2, dans laquelle lorsque [M$^I$] désigne le nombre de moles des métaux alcalins dans (B) le stabilisant à base de phosphore, que [M$^{II}$] désigne le nombre de moles des métaux sélectionnés dans le groupe consistant en les métaux alcalino-terreux et le magnésium dans (B) le stabilisant à base de phosphore, et que [P] désigne le nombre de moles de phosphore dans (B) le stabilisant à base de phosphore, alors $1{,}10 \leq ([M^I] + [M^{II}] * 2) / [P] \leq 1{,}80$ est satisfait.

4. Composition de résine éthercétone entièrement aromatique selon l'une des revendications 1 à 3, dans laquelle

   (A) la résine éthercétone entièrement aromatique est une ou plusieurs sélectionnées dans le groupe consistant en la polyéthercétone, la polyétheréthercétone et la polyéthercétoneéthercétonecétone.

5. Composition de résine éthercétone entièrement aromatique selon l'une des revendications 1 à 4, dans laquelle

   (B1) le dihydrogénophosphate est un dihydrogénophosphate d'un ou plusieurs métaux sélectionnés dans le groupe consistant en le sodium, le potassium, le magnésium et le calcium, et
   (B2) l'hydrogénophosphate est un hydrogénophosphate d'un ou plusieurs métaux sélectionnés dans le groupe consistant en le sodium, le potassium, le magnésium et le calcium.

6. Composition de résine éthercétone entièrement aromatique selon l'une des revendications 1 à 5, dans laquelle une quantité totale du (B) stabilisant à base de phosphore est de 100 à 1000 ppm en masse.

**7.** Composition de résine éthercétone entièrement aromatique selon l'une des revendications 1 à 6, dans laquelle :

(A) la résine éthercétone entièrement aromatique est la polyéthercétone.

**8.** Article moulé obtenu par moulage de la composition de résine éthercétone entièrement aromatique selon l'une des revendications 1 à 7.

**9.** Stabilisant à base de phosphore comprenant :

(B1) un dihydrogénophosphate ; et
(B2) un hydrogénophosphate, dans lequel
(B1) le dihydrogénophosphate est un ou plusieurs dihydrogénophosphates de métaux alcalins ou un ou plusieurs dihydrogénophosphates de métaux sélectionnés dans le groupe consistant en les métaux alcalino-terreux et le magnésium,
(B2) l'hydrogénophosphate est un ou plusieurs hydrogénophosphates de métaux alcalins ou un ou plusieurs hydrogénophosphates de métaux sélectionnés dans le groupe consistant en les métaux alcalino-terreux et le magnésium,
lorsque (B1) le dihydrogénophosphate est les un ou plusieurs dihydrogénophosphates de métaux alcalins, (B2) l'hydrogénophosphate est les un ou plusieurs hydrogénophosphates de métaux sélectionnés dans le groupe consistant en les métaux alcalino-terreux et le magnésium, et
lorsque (B1) le dihydrogénophosphate est les un ou plusieurs dihydrogénophosphates des métaux sélectionnés dans le groupe consistant en les métaux alcalino-terreux et le magnésium, (B2) l'hydrogénophosphate est un ou plusieurs hydrogénophosphates de métaux alcalins.

**10.** Stabilisant à base de phosphore selon la revendication 9, dans lequel
lorsque $[M^I]$ désigne le nombre de moles des métaux alcalins, que $[M^{II}]$ désigne le nombre de moles des métaux sélectionnés dans le groupe consistant en les métaux alcalino-terreux et le magnésium, et que $[P]$ désigne le nombre de moles de phosphore, alors $1,00 < ([M^I] + [M^{II}] * 2) / [P] < 2,00$ est satisfait.

**11.** Stabilisant à base de phosphore selon la revendication 9 ou 10, dans lequel

(B1) le dihydrogénophosphate est un dihydrogénophosphate d'un ou plusieurs métaux sélectionnés dans le groupe consistant en le sodium, le potassium, le magnésium et le calcium, et
(B2) l'hydrogénophosphate est un hydrogénophosphate d'un ou plusieurs métaux sélectionnés dans le groupe consistant en le sodium, le potassium, le magnésium et le calcium.

**12.** Stabilisant à base de phosphore selon l'une des revendications 9 à 11, dans lequel
lorsque $[M^I]$ désigne le nombre de moles des métaux alcalins, que $[M^{II}]$ désigne le nombre de moles des métaux sélectionnés dans le groupe consistant en les métaux alcalino-terreux et le magnésium, et que $[P]$ désigne le nombre de moles de phosphore, alors $1,10 \leq ([M^I] + [M^{II}] * 2) / [P] \leq 1,80$ est satisfait.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018520257 A
- JP 2018520258 A
- JP SHO61138626 A
- JP 2009227961 A

**Non-patent literature cited in the description**

- *The journal of the Metal Finishing Society*, 1977, vol. 28 (1)